(19) **Europäisches Patentamt**
**European Patent Office**
**Office européen des brevets**

(11) **EP 1 683 681 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
***B60R 16/02*** *(2006.01)* ***H02J 1/14*** *(2006.01)*

(21) Anmeldenummer: **06100354.7**

(22) Anmeldetag: **16.01.2006**

(54) **System und Verfahren zum Regeln von Leistung in einem Kraftfahrzeugbordnetz**

System and method for controlling the power distribution within a vehicle distribution network

Système et méthode pour le contrôle de la distribution de l'énergie dans un réseau électrique de véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.01.2005 DE 102005002401**

(43) Veröffentlichungstag der Anmeldung:
**26.07.2006 Patentblatt 2006/30**

(73) Patentinhaber: **Hella KGaA Hueck & Co.**
**59552 Lippstadt (DE)**

(72) Erfinder:
• **Janke, Thorsten**
**48231, Warendorf (DE)**
• **Olk, Joachim**
**59558, Lippstadt (DE)**
• **Rosenmayr, Marc**
**59555, Lippstadt (DE)**

(56) Entgegenhaltungen:
**WO-A-00/35714      WO-A-02/087053**
**DE-A1- 10 354 279**

**Beschreibung**

STAND DER TECHNIK

Die Erfindung betrifft eine Anordnung und ein Verfahren zum Regeln von Leistung in einem Kraftfahrzeugbordnetz mit einer zentralen Recheneinheit, Energieverbrauchern, Energieerzeugern, Energiewandlern und/oder Energiespeichern.

Eine solche Anordnung ist aus der Druckschrift mit der Veröffentlichungsnummer WO 2004/080764 bekannt. Die zentrale Recheneinheit ist bei der in der genannten Druckschrift beschriebenen Anordnung mit dezentralen Recheneinheiten über Verbindungsmittel verbunden. In besonders fahrkritischen Situationen besteht insbesondere bei sicherheitsrelevanten elektrischen Komponenten das Kraftfahrzeugbordnetz ein zum Teil gegenüber der normalen Fahrsituation deutlich erhöhter Leistungsbedarf. In solchen Fällen muss durch die zentrale Recheneinheit die Leistungsbereitstellung der in den kritischen Situationen angesprochenen Komponenten sichergestellt sein. In der zentralen Recheneinheit ist hierzu ein übergeordnetes Schaltmittel vorgesehen, mit dem ein Verbindungsmittel zu einer dezentralen Recheneinheit deaktiviert wird und/oder aktiviert werden kann, wenn durch eine mit einem anderen Verbindungsmittel verbundene Komponente ein Leistungsbedarf signalisiert wird, der deutlich über das für den normalen Betrieb des Kraftfahrzeugs übliche Maß hinausgeht.

Damit in den kritischen Situationen der erhöhte Leistungsbedarf der sicherheitsrelevanten elektrischen Komponenten gedeckt werden kann, ist bei der in der genannten Druckschrift beschriebenen Anordnung immer eine Kommunikation zwischen der dezentralen Recheneinheit, die der elektrischen Komponente zugeordnet ist, und der zentralen Recheneinheit notwendig. Durch diese notwendige Kommunikation entsteht eine Zeitverzögerung, von dem Feststellen des Leistungsbedarfs bis zur Verfügungstellung der Leistung für die entsprechende Komponente. Eine solche Verzögerung kann in kritischen Situationen nachteilig sein.

Das Dokument WO 00/35714 offenbart den Oberbegriff des Anspruchs 1.

VORTEILE DER ERFINDUNG

Der Erfindung liegt daher die Aufgabe zugrunde, eine Anordnung der eingangs genannten Art so zu verbessern, dass eine schnelle Leistungsbereitstellung insbesondere in kritischen Situationen mit plötzlichem erhöhtem Leistungsbedarf einer elektrischen Komponente möglich ist.

Diese Aufgabe wird erfindungsgemäß dadurch gelöst, dass mit der zentralen Recheneinheit Sollwerte von maximal erlaubten Leistungsaufnahmen der Energieverbraucher beziehungsweise gegebenenfalls der Energiespeicher oder Energiewandler erzeugbar sind und mit der darüber hinaus Sollwerte über die von den Energieerzeugern beziehungsweise gegebenenfalls von den Energiespeichern oder Energiewandlern zur Verfügung zu stellenden Leistung erzeugbar sind. Ein Energieverbraucher beziehungsweise gegebenenfalls ein Energiespeicher und/oder Energiewandler können Leistung bis zu dem Sollwert anfordern, ohne dass dazu eine besondere Kommunikation zwischen dem Energieverbraucher, dem Energiespeicher beziehungsweise dem Energiewandler und der zentralen Recheneinheit notwendig ist. In dem Kraftfahrzeugbordnetz wird durch die zentrale Recheneinheit immer dafür Sorge getragen, dass die Verbraucher beziehungsweise Energiespeicher und/oder Energiewandler bis zu dem Sollwert Leistung abfordern können, ohne dass es zu einer Instabilität oder einer Überbelastung des Kraftfahrzeugbordnetzes kommt.

Die erzeugbaren Sollwerte können dabei von einer für die Aufrechterhaltung der Funktion der Energieverbraucher notwendigen Mindestleistungsaufnahme abhängen. Den Energieverbrauchern ist damit eine Leistung reserviert, die in jedem Fall in Anspruch genommen werden kann, um die Funktion des Energieverbrauchers aufrecht zu erhalten.

Die erzeugbaren Sollwerte können ferner von der Bedeutung der Verbraucher für vorbestimmte Funktionen des Kraftfahrzeugs abhängen. Diese Bedeutung, die nachfolgend als Priorität des Energieverbrauchers bezeichnet wird, kann beispielsweise angeben, ob es sich um einen sicherheitsrelevanten Verbraucher (höchste Priorität, Priorität 1), um einen Energieverbraucher mit Schutzfunktion für das Fahrzeug (Priorität 2), um einen Energieverbraucher mit dem Fahrer unterstützenden Funktionen (Priorität 3), um einen Energieverbraucher für Komfortfunktionen (Priorität 4) oder um einen anderen Verbraucher handelt (niedrigste Priorität, Priorität 5). Wird die Priorität des Energieverbrauchers bei der Verteilung der Leistung berücksichtigt, werden zunächst Energieverbraucher mit hoher Priorität berücksichtigt, bevor den Energieverbrauchern mit niedriger Priorität eine Leistung zugeteilt wird.

Die Anordnung kann dezentrale Recheneinheiten umfassen, die den einzelnen Energieverbrauchern, Energieerzeugern, Energiewandlern oder Energiespeichern zugeordnet sind und mit welchen die Mindestleistungsaufnahme und/oder die Priorität der Verbraucher, Erzeuger, Wandler oder Speicher der zentralen Recheneinheit anzeigbar ist. Darüber hinaus können auch weitere physikalische Größen von den dezentralen Recheneinheiten der zentralen Recheneinheit mitgeteilt werden, die für die Leistungsverteilung von Bedeutung sein können.

Die von der zentralen Recheneinheit erzeugbaren Sollwerte können beispielsweise von Werten einer vorausgesagten zukünftigen Leistungsaufnahme eines der Energieverbraucher, Energiespeicher oder Energiewandler abhängen, die die dezentralen Recheneinheiten der zentralen Recheneinheit mitteilen.

Von der zentralen Recheneinheit kann der Sollwert der maximal erlaubten Leistungsaufnahme eines Energieverbrauchers, Energiespeichers oder Energiewandlers mit höchster Priorität immer auf den Wert der von der zugeordneten dezentralen Recheneinheit vorausgesagten zukünftigen Leistungsaufnahme gesetzt werden. Dann ist gewährleistet, dass die Energieverbraucher, Energiewandler oder Energiespeicher mit der höchsten Priorität jederzeit das Bordnetz mit der vorhergesagten Leistungsaufnahme belasten können.

Die von der zentralen Recheneinheit erzeugbaren Sollwerte können in Abhängigkeit von einem gemessenen Wert der tatsächlichen Leistungsaufnahme jedes der Energieverbraucher, Energiewandler und/oder Energiespeichers beziehungsweise einem gemessenen Wert der tatsächlichen Leistungsbereitstellung jedes der Energieerzeugers, Energiewandlers oder Energiespeichers erzeugt werden. Erfolgt eine Berücksichtigung der tatsächlichen Werte ist in der zentralen Recheneinheit eine Bilanzierung der tatsächlichen Leistungsaufnahme und der tatsächlichen Leistungsbereitstellung möglich.

Die zentrale Recheneinheit und/oder die dezentralen Recheneinheiten können in einer eigenen Baugruppe, wie zum Beispiel einem Steuergerät vorgesehen sein. Alle Recheneinheiten können auch in einer gemeinsamen Baugruppe angeordnet sein. Die Recheneinheiten können darüber hinaus ebenso als Programme oder Programmmodule in einem Steuergerät oder verschiedenen Steuergeräten implementiert sein. Ebenso ist es möglich die Recheneinheiten als Hardware-Module z. B. ASICs, Gatearrays, FPGAs. o. ä. oder z. B. analoge Rechenschaltungen zu realisieren. Die Energieerzeuger einer erfindungsgemäßen Anordnung können z. B. riemengetriebene, über Getriebe gekoppelte oder über die Kurbelwelle angetriebene, mechanische Generatoren, Solarpanels, Brennstoffzellen, elektrothermische Generatoren, elektrochemische Primarzellen oder ähnliches sein. Es können in einer Anordnung auch Energieerzeuger unterschiedlicher Typen eingesetzt sein.

Bei den Energiespeichern kann es sich unter anderem um Sekundarzellen, so genannte "Ultracaps" oder ähnliches handeln. Es können in einer Anordnung Energiespeicher unterschiedlicher Typen und Neuspannungen eingesetzt sein.

In einer erfindungsgemäßen Anordnung können ein oder mehrere Energiewandler eingesetzt sein.

ZEICHNUNGEN

Ein Ausführungsbeispiel für eine erfindungsgemäße Anordnung zum Regeln von Leistung in einem Kraftfahrzeugbordnetz und ein Verfahren dazu sind anhand der Zeichnung näher beschrieben. Darin zeigt

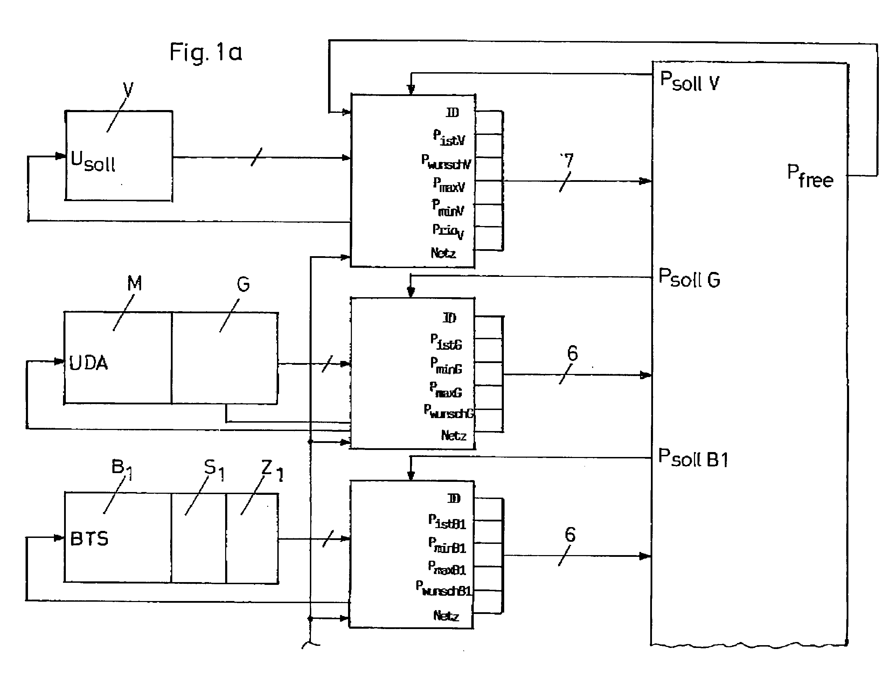

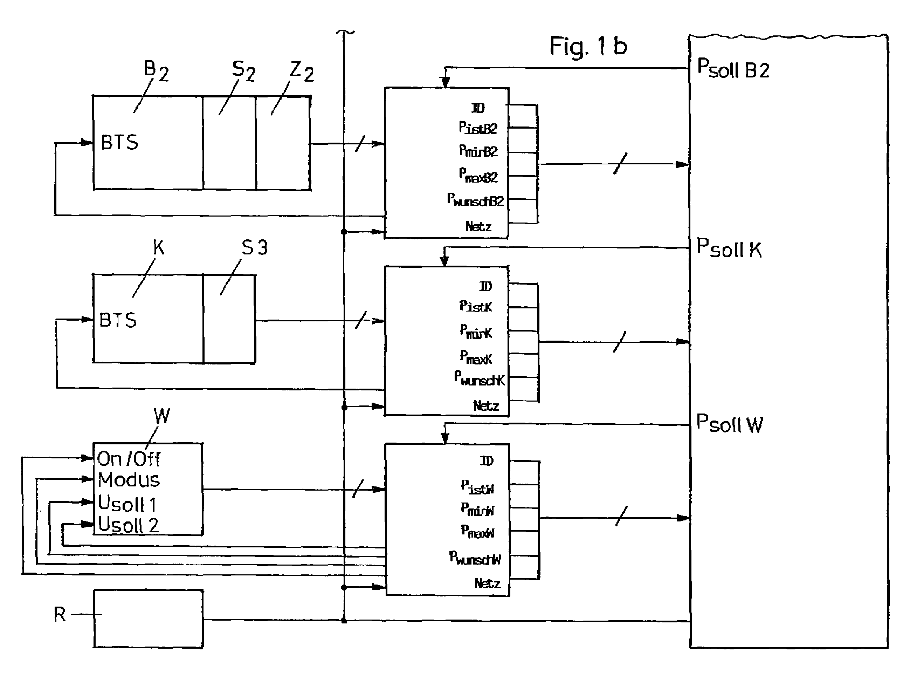

Fig. 1a, b      den Funktionsplan der erfindungsgemäßen Anordnung.

BESCHREIBUNG DER AUSFÜHRUNGSBEISPIELE

Die in den Figuren 1a, b dargestellte erfindungsgemäße Anordnung umfasst eine zentrale Recheneinheit $Z$ und die zentrale Recheneinheiten $D_v$, Dg, $D_{b1}$, $D_{b2}$, $D_k$, $D_w$. Die dezentralen Recheneinheiten $D_v$, Dg, $D_{b1}$, $D_{b2}$, $D_k$, $D_w$ sind mit der zentralen Recheneinheit $Z$ verbunden, so dass Informationen von den dezentralen Recheneinheiten $D_v$, Dg, $D_{b1}$, $D_{b2}$, $D_k$, $D_w$ an die zentrale Recheneinheit $Z$ gegeben werden können. Umgekehrt werden darüber hinaus auch Informationen von der zentralen Recheneinheit $Z$ an die einzelnen dezentralen Recheneinheiten gegeben. Die dezentralen Recheneinheiten $D_v$, Dg, $D_{b1}$, $D_{b2}$, $D_k$, $D_w$ sind jeweils einer Komponente des Kraftfahrzeugbordnetzes zugeordnet. Es kann sich dabei um Energieverbraucher $V$, Energieerzeuger $G$, Energiespeicher $B_1$, $B_2$, $K$ oder Energiewandler $W$ handeln. In der Fig. 1a ist beispielhaft nur ein Energieverbraucher $V$ dargestellt. Dieser ist der dezentralen Recheneinheit $D_v$ zugeordnet. Als Energieerzeuger ist ein Generator $G$ angegeben, der mit der dezentralen Recheneinheit Dg verbunden ist. Dem Generator $G$ ist ein Motor $M$ zugeordnet, welcher den Generator $G$ antreibt. Auch der Motor $M$ ist mit der dezentralen Recheneinheit Dg verbunden.

Als einer von insgesamt drei Energiespeichern ist eine Batterie $B_1$ vorgesehen, bei der es sich um eine 12V-Batterie handelt. Diese Batterie $B_1$ ist mit einem intelligenten Batteriesensor $S_1$ verschaltet, der Informationen über die Spannung, den Strom und die Temperatur der Batterie $B_1$ an eine Batteriezustandserkennung $Z_1$ liefert, welche aus diesen Werten Informationen ermittelt und diese dann der dezentralen Recheneinheit $D_{B1}$ liefert, die der Batterie $B_1$ zugeordnet ist.

Als zweiter Energiespeicher ist eine Batterie $B_2$ vorgesehen. Bei dieser Batterie handelt es sich um einen Energiespeicher mit einer Sekundärspannung von 42V. Auch dieser Batterie $B_2$ ist ein intelligenter Batteriesensor $S_2$, eine Batteriezustandserkennung $Z_2$ und als dezentrale Recheneinheit eine dezentrale Recheneinheit $D_{b2}$ zugeordnet.

Als dritter Energiespeicher steht in dem Kraftfahrzeugbordnetz ein als Ultracap bezeichneter Elektrolytkondensator $K$ zur Verfügung. Auch dieser Elektrolytkondensator $K$ ist mit einem intelligenten Batteriesensor $S_3$ verschaltet. Dieser intelligente Batteriesensor ist dann unmittelbar mit der dem Elektrolytkondensator zugeordneten dezentralen Recheneinheit $D_k$ verbunden.

Das Kraftfahrzeugbordnetz ist in zwei Teilnetze aufgeteilt und zwar in ein Teilnetz mit einer Nennspannung von 14V und ein zweites Bordnetz mit einer Nennspannung von 42V. Die Komponenten des Kraftfahrzeugbordnetzes sind jeweils einem der Teilnetze zugeordnet, ohne dass dies besonders dargestellt ist.

Ein Energiewandler W ermöglicht es, Spannung, die in dem einen Teilnetz zur Verfügung steht, umzuwandeln, um sie in dem anderen Teilnetz zur Verfügung zu stellen. Mit dem Wandler W kann also 14V-Spannung in 42V-Spannung umgewandelt werden und umgekehrt. Der Energiewandler ermöglicht es somit, Energie aus dem einen Teilnetz in das andere Teilnetz zu transportieren und umgekehrt. Für das Quellteilnetz zählt der Energiewandler dann als Energieverbraucher und in dem Zielteilnetz des Kraftfahrzeugbordnetzes als Energieerzeuger.

Ebenso können auch die Energiespeicher $B_1$, $B_2$, K als Energieverbraucher oder Energieerzeuger betrachtet werden. Sofern nämlich die Energiespeicher $B_1$, $B_2$, K aus dem Kraftfahrzeugbordnetz aufgeladen werden, zählen sie als Verbraucher, während in den Fällen, in denen die Energiespeicher $B_1$, $B_2$, K entladen werden als Energieerzeuger betrachtet werden können.

Die zentrale Recheneinheit Z hat in der Anordnung die Aufgabe, die verfügbare Leistung, die von den Energieerzeugern G, den Energiespeichern $B_1$, $B_2$, K und gegebenenfalls dem Energiewandler W zur Verfügung gestellt werden kann, gleichmäßig an die Energieverbraucher V und gegebenenfalls an die Energiespeicher $B_1$, $B_2$, K und den Energiewandler W zu verteilen, ohne dass es zu einer Überlastung des Kraftfahrzeugbordnetzes kommt. In dem Fall einer Überlastung des Kraftfahrzeugbordnetzes, d. h. der Fall, dass mehr Leistung gebraucht werden soll, als zur Verfügung gestellt werden kann, soll die Anordnung und insbesondere die zentrale Recheneinheit Z dafür Sorge tragen, dass insbesondere sicherheitsrelevante Funktionen des Kraftfahrzeugs erhalten bleiben.

Die zentrale Recheneinheit Z ist dabei so ausgelegt, dass sie beliebig erweiterbar ist, um weitere Energieverbraucher, Energiespeicher oder Energiewandler mit in die Regelung der Leistung einzubeziehen. Die zentrale Recheneinheit kann als eigene Baugruppe in einem Kraftfahrzeug vorgesehen werden. Sie kann aber auch als Programm oder Programmmodul auf einem beliebigen Gerät, insbesondere Steuergerät implementiert werden.

Zur Kommunikation der zentralen Recheneinheit Z mit den Energieverbrauchern, Energieerzeugern, Energiespeichern oder Energiewandlern sind die dezentralen Recheneinheiten $D_v$, Dg, $D_{b1}$, $D_{b2}$, $D_k$, $D_W$ vorgesehen, die darüber hinaus nach Vorgabe der zentralen Recheneinheit Z auch an der Verteilung der Leistung beziehungsweise Energie beteiligt sind. Die dezentralen Recheneinheiten $D_v$, Dg, $D_{b1}$, $D_{b2}$, $D_k$, $D_w$ können ebenfalls als eigene Baugruppen oder aber als Programm oder Programmmodule ausgestaltet sein. Sind die dezentralen Recheneinheiten $D_v$, Dg, $D_{b1}$, $D_{b2}$, $D_k$, $D_W$ als Programm oder Programmmodule ausgestaltet, können sie auf beliebigen Geräten, insbesondere Steuergeräten implementiert werden. So können beispielsweise die dezentralen und die zentralen Recheneinheiten in einem einzigen Steuergerät implementiert sein.

Der zentralen Recheneinheit Z werden folgende Informationen von den dezentralen Recheneinheiten $D_v$, Dg, $D_{b1}$, $D_{b2}$, $D_k$ und $D_w$ zur Verfügung gestellt:

| ID | Identifikationscode der Komponente des Kfz-Bordnetzes |
|---|---|
| $P_{min}$ | minimal mögliche Leistungsaufnahme eines Verbrauchers zur Gewährleistung Notfahreigenschaften |
| $P_{max}$ | maximal mögliche Leistungsaufnahme eines Verbrauchers; maximal mögliche Leistungsabgabe eines Erzeugers |
| $P_{ist}$ | aktuelle Leistungsaufnahme eines Verbrauchers; aktuelle Leistungsabgabe eines Erzeugers |
| $P_{wunsch}$ | vorausgesagte Leistungsaufnahme eines Verbrauchers; vorausgesagte Leistungsabgabe eines Erzeugers |
| Netz | Netznummer des Teilnetzes an das die Komponente angeschlossen ist. |

Insbesondere mit den Informationen über die Mindestleistungsaufnahme $P_{min}$, die gewünschte Leistungsaufnahme $P_{wunschr}$, der gemessenen Leistungsaufnahme $P_{ist}$ und der Priorität beziehungsweise der Prioritäten der Verbraucher ermittelt die zentrale Recheneinheit Z Sollwerte $P_{sollV}$, $P_{sollG}$, $P_{sollB1}$, $P_{sollB2}$, $P_{sollK}$, $P_{sollW}$ für die Leistungsaufnahme, den einzelnen Energieverbrauchern gestattet wird, beziehungsweise Sollwerte $P_{sollV}$, $P_{sollG}$, $P_{sollB1}$, $P_{sollB2}$, $P_{sollK}$, $P_{sollW}$ für die Leistung, die durch die Energieerzeuger im Kraftfahrzeugnetz zur Verfügung gestellt werden soll.

Die Verteilung der Leistung kann dabei nach dem folgenden Schema erfolgen.

```
Für Prio n von 1 bis 5
    Für alle Verbraucher V mit Prio = n
    P_minV ≤ P_avail
    ja                              nein
    P_avail = P_avail-P_minV    Fehler
```

Für jedes Teilnetz wird die in den Energieerzeugern, Energiespeichern oder Energiewandlern zur Verfügung tatsächlich gestellte Leistung $P_{ist}$ ermittelt. Die Summe ergibt dabei die Menge der zur Verfügung stehenden Leistung $P_{avail}$. Die zur Verfügung stehende Leistung $P_{avail}$ wird dann zunächst über die zur Deckung der Mindestleistungsaufnahme $P_{min}$ der Verbraucher zur Erhaltung ihrer Grundfunktion herangezogen. Die Verbraucher werden dabei nach ihrer Priorität berücksichtigt. Sofern die zur Verfügung stehende Leistungsmenge $P_{avail}$ größer ist als die Summe der Mindestleistungsaufnahme $P_{min}$ der Verbraucher mit der höchsten Priorität wird jedem Verbraucher die Mindestleistungsaufnahme garantiert und zugewiesen. Sofern dann noch ausreichend Leistung zur Verfügung steht, wird die Leistung den prioritätsniedrigeren Verbrauchern zugeteilt. Reicht die zur Verfügung stehende Leistung $P_{avail}$ nicht zur Deckung der Mindestleistungsaufnahme aller Verbraucher aus, wird die Verteilung der Leistung abgebrochen. Gleichzeitig können dann die Energieerzeuger veranlasst werden, mehr Leistung zur Verfügung zu stellen.

Reicht dagegen die zur Verfügung stehende und noch nicht verplante Leistung $P_{avail}$ aus, um die Mindestleistungsaufnahme der Verbraucher zu decken und verbleibt darüber hinaus auch noch ein weiterer Anteil von Leistung, wird die verbleibende zur Verfügung stehende Leistung $P_{avail}$ unter Berücksichtigung der Priorität der Verbraucher auf die Verbraucher verteilt. Die Verteilung erfolgt dabei nach dem nachstehenden Schema, wobei $P_{delta}$ eine verbraucherspezifische Leistungsdifferenz zwischen zwei Schaltstufen eines Verbrauchers ist, der in Schaltstufen geschaltet werden kann. $P_{delta}$ ergibt sich dabei aus

$$P_{delta} = P_{max} / (\text{Anzahl der Schaltstufen des Verbrauchers} -1)$$

```
Für Prio n von 1 bis 5
    Für alle Verbraucher V mit Prio n (sortiert
    nach P_delta)
    Faktor = min(1; P_avail / ΣP_wunschV )
    PsollV = floor( P_sollV = * Faktor / P_deltaV ) * P_deltaV
```

Jeder Verbraucher kann ohne weiteres die ihm zugeteilte Leistung $P_{sollV}$, $P_{sollG}$, $P_{sollB1}$, $P_{sollB2}$, $P_{sollK}$, $P_{sollW}$ in Anspruch nehmen. Dazu ist keine besondere Anfrage bei der zentralen Recheneinheit Z notwendig. Möchte ein Verbraucher V oder ein Energiespeicher $B_1$, $B_2$, K oder Wandler W im Verbraucherbetrieb zusätzliche Leistung in Anspruch nehmen, kann er dies bis zur Grenze von $P_{sollV}$, $P_{sollG}$, $P_{sollB1}$, $P_{sollB2}$, $P_{sollK}$, $P_{sollW}$ ohne Verzögerung tun.

Eine zeitverzögernde Kommunikation mit der zentralen Recheneinheit Z ist dazu nicht notwendig. Da $P_{sollV}$, $P_{sollG}$, $P_{sollB1}$, $P_{sollB2}$, $P_{sollK}$, $P_{sollW}$ für Verbraucher mit höchster Priorität immer gleich einer voraussichtlichen, zukünftigen Leistungsaufnahme $P_{wunsch}$ ist, können Verbraucher mit höchster Priorität jederzeit ohne Kommunikation zwischen dem Verbraucher beziehungsweise der dezentralen Recheneinheit $D_v$ auf der einen Seite und der zentralen Recheneinheit Z auf der anderen Seite die Leistung in Anspruch nehmen, die benötigt wird, um sicherheitsrelevante Funktionen des Kraftfahrzeugs zu erhalten.

Die Priorität eines Verbrauchers V ist abhängig vom Gesamtzustand des Kraftfahrzeugs. So sind im Fahrbetrieb andere sicherheitsrelevante Funktionen unabdingbar als im Stand oder im abgeschalteten Zustand des Fahrzeugs. Daher hat die zentrale Recheneinheit einen Eingang der als Restwelt bezeichnet wird. Die Restwelt R gibt zum einen den Fahrzustand des Fahrzeugs an, kann aber auch andere physikalische Größen im Fahrzeug oder in der Umgebung wie beispielsweise Temperatur, Luftfeuchtigkeit oder ähnliches umfassen. Darüber hinaus kann die Restwelt auch die Vorgabe eines sogenannten Eco-Modus umfassen, in dem auch eine besondere Priorisierung der Verbraucher und eine besondere Verteilung der zur Verfügung stehenden Leistung erfolgt. Im Eco-Modus soll möglichst nur die Energie verbraucht werden, die mit einem hohen Wirkungsgrad erzeugt worden ist. Damit die zentrale Recheneinheit dazu eine Bewertung vornehmen kann, werden von den dezentralen Recheneinheiten Energieerzeuger, der Energiespeicher und der Energiewandler Angaben über den Wirkungsgrad $W_{grad}$ an die zentrale Recheinheit Z gegeben.

Von den dezentralen Recheneinheiten $D_v$, Dg, $D_{b1}$, $D_{b2}$, $D_k$, $D_w$ der Energieverbraucher V, Energieerzeuger G, Energiespeicher $B_1$, $B_2$, $B_3$ und Energiewandler W werden Steuersignale an den zugeordneten Energieverbraucher V, Energieerzeuger G, beziehungsweise den den Energieerzeuger antreibenden Motor M, die Energiespeicher $B_1$, $B_2$, K und den Energiewandler W gegeben, damit die entsprechenden Komponenten entsprechend der zur Verfügung gestellten Leistung $P_{soll}$ arbeiten und nicht zuviel Leistung aufnehmen beziehungsweise zu wenig Leistung zur Verfügung stellen. Die von der dezentralen Recheneinheit $D_v$ des Verbrauchers V in den Verbraucher eingekoppelte Größe ist dabei die Spannung $U_{soll}$. Von der dezentralen Recheneinheit Dg des Generators G wird als Sollgröße die Leerlaufdrehzahl in den Motor beziehungsweise die Motorsteuerung eingekoppelt und dem Generator G wird eine Sollspannung vorgegeben. Bei den Energiespeichern wird mittels eines Steuersignals der dezentralen Recheneinheiten $D_{b1}$, $D_{b2}$, $D_k$ ein Batterietrennschalter in verschiedene Stellung gebracht, je nach dem, ob die Batterie vom Netz abgekoppelt zum Laden an das Netz angekoppelt oder zum Entladen an das Netz angekoppelt ist. Eine ähnliche Steuerung ist für den Elektrolytkondensator K vorgesehen. Die dezentrale Steuereinheit $D_w$ des Energiewandlers gibt ein Ein- beziehungsweise Ausschaltsignal an den Energiewandler W ab. Darüber hinaus gibt die dezentrale Recheneinheit $D_W$ ein Modus vor, in welchem der Energiewandler W arbeiten soll, sofern er eingeschaltet ist. Es kann dabei der Modus eingenommen werden, in dem Leistung aus dem 14V-Bordnetz in dem 42V-Bordnetz zur Verfügung gestellt wird und ein Modus in dem die Leistung aus dem 42V-Bordnetz in dem 14V-Bordnetz zur Verfügung gestellt wird. Abhängig von dem Modus werden auch verschiedene Spannungen $U_{soll1}$, $U_{soll2}$ durch die dezentrale Recheneinheit $D_w$ dem Energiewandler W vorgegeben.

Optional kann die in der Figur dargestellte Anordnung global eine Leistungsreserve zur Verfügung stellen. Diese global zur Verfügung gestellte Leistungsreserve ist als $P_{free}$ bezeichnet und kann für jedes Teilnetz des Kraftfahrzeugbordnetzes separat ermittelt werden. Diese globale Leistungsreserve $P_{free}$ kann ohne besondere Anfrage an der zentralen Recheneinheit Z von jedem Verbraucher, Energiespeicher oder Energiewandler in Anspruch genommen werden. Auch dafür ist keine besondere Kommunikation zwischen den dezentralen Recheneinheiten $D_v$, $D_g$, $D_{b1}$, $D_{b2}$, $D_k$, $D_w$ und der zentralen Recheneinheit Z notwendig. Damit ist es möglich, bei einem besonders hohen, kurzfristigen und nicht vorhergesagten Leistungsbedarf schnell und ohne Verzögerung durch Kommunikation zwischen der dezentralen Recheneinheit Z und der zentralen Recheneinheit $D_v$, Dg, $D_{b1}$, $D_{b2}$, $D_k$, $D_w$ zu reagieren.

**Patentansprüche**

1. Anordnung zum Regeln von Leistung in einem Kraftfahrzeugbordnetz mit einer zentralen Recheneinheit (Z), Energieverbrauchern (V), Energieerzeugern (G), Energiespeichern ($B_1$, $B_2$, K) und/oder Energiewandlern (W), wobei

- mit der zentralen Recheneinheit (Z) Sollwerte ($P_{sollv}$, $P_{sollG}$, $P_{sollB1}$, $P_{sollB2}$, $P_{sollK}$, $P_{sollW}$) von Leistungsaufnahmen der Energieverbraucher (V) beziehungsweise gegebenenfalls der Energiespeicher ($B_1$, $B_2$, K) und/oder Energiewandler (W) erzeugbar sind, und
- mit der zentralen Recheneinheit (Z) Sollwerte ($P_{sollV}$, $P_{sollG}$, $P_{sollB1}$, $P_{sollB2}$, $P_{sollK}$, $P_{sollW}$) für die von den Energieerzeugern (G) beziehungsweise gegebenenfalls von den Energiespeichern ($B_1$, $B_2$, G) und/oder Energiewandlern (W) zur Verfügung zu stellenden Leistung erzeugbar sind,

**dadurch gekennzeichnet,**
**dass** die Sollwerte ($P_{sollV}$, $P_{sollG}$, $P_{sollB1}$, $P_{sollB2}$, $P_{sollK}$, $P_{sollW}$) der Leistungsaufnahmen die maximal erlaubten Leistungsaufnahmen der Energieverbraucher (V) beziehungsweise gegebenenfalls der Energiespeicher ($B_1$, $B_2$, K) und/oder Energiewandler (W) sind,

**dass** der Energieverbraucher (V) beziehungsweise gegebenenfalls der Energiespeicher ($B_1$, $B_2$, K) und/oder Energiewandler (W) zum Anfordern von Leistung bis zu dem Sollwert ($P_{sollV}$, $P_{sollG}$, $P_{sollB1}$, $P_{sollB2}$, $P_{sollK}$, $P_{sollW}$) geeignet und eingerichtet sind, ohne dazu mit der zentralen Recheneinheit zu kommunizieren, und

**dass** die zentrale Recheneinheit (Z) dazu geeignet und eingerichtet ist sicherzustellen, dass die Energieverbraucher (V) beziehungsweise gegebenenfalls der Energiespeicher ($B_1$, $B_2$, K) und/oder Energiewandler (W) immer bis zu dem Sollwert ($P_{sollV}$, $P_{sollG}$, $P_{sollB1}$, $P_{sollB2}$, $P_{sollK}$, $P_{sollW}$) Leistung anfordern können, ohne dass es zu einer Instabilität oder Überlastung des Kraftfahrzeugbordnetzes kommt.

2. Anordnung nach Anspruch 1, **dadurch gekennzeichnet, dass** die erzeugbaren Sollwerte ($P_{sollV}$, $P_{sollG}$, $P_{sollB1}$, $P_{sollB2}$, $P_{sollK}$, $P_{sollW}$) von einer für die Aufrechterhaltung der Funktion der Verbraucher notwendigen Mindestleistungsaufnahme ($P_{min}$) abhängen.

3. Anordnung nach Anspruch 1 oder 2, **dadurch gekennzeichnet, dass** die erzeugbaren Sollwerte ($P_{sollV}$, $P_{sollG}$, $P_{sollB1}$, $P_{sollB2}$, $P_{sollK}$, $P_{sollW}$) von einer Bedeutung (Priorität) der Verbraucher für vorbestimmte Funktionen des Kraftfahrzeugs abhängen.

4. Anordnung nach einem der Ansprüche 2 oder 3, **dadurch gekennzeichnet, dass** die Anordnung dezentrale Recheneinheiten ($D_v$, $D_g$, $D_{b1}$, $D_{b2}$, $D_k$, $D_w$) umfasst, die den einzelnen Energieverbrauchern (V), Energieerzeugern (G), Energiewandlern (W) oder Energiespeichern ($B_1$, $B_2$, K) zugeordnet sind und mit welchen die Mindestleistungsaufnahme ($P_{min}$) und/oder die Priorität (Prio) der Energieverbraucher (V), der Energiespeicher ($B_1$, $B_2$, K) oder der Energiewandler (W) der zentralen Recheneinheit (Z) anzeigbar ist.

5. Anordnung nach einem der Ansprüche 2 bis 4, **dadurch gekennzeichnet, dass** die erzeugbaren Sollwerte ($P_{sollV}$, $P_{sollG}$, $P_{sollB1}$, $P_{sollB2}$, $P_{sollK}$, $P_{sollW}$) von den dezentralen Recheneinheiten (D) für die zugeordneten Verbraucher (V), Energiespeicher ($B_1$, $B_2$, K) oder Energiewandlern (W) vorausgesagten Werten einer ($P_{wunsch}$) zukünftigen Leistungsaufnahme abhängen.

6. Anordnung nach Anspruch 5, **dadurch gekennzeichnet, dass** von zentralen Recheneinheit (Z) für Verbraucher (V) mit höchster Priorität der Sollwert ($P_{sollV}$, $P_{sollG}$, $P_{sollB1}$, $P_{sollB2}$, $P_{sollK}$, $P_{sollW}$) der maximal erlaubten Leistungsaufnahme eines Verbrauchers (V) immer auf den Wert der vorausgesagten Werte ($P_{wunsch}$) der zukünftigen Leistungsaufnahme setzbar sind.

7. Anordnung nach einem der Ansprüche 1 bis 6, **dadurch gekennzeichnet, dass** die erzeugbaren Sollwerte ($P_{sollV}$, $P_{sollG}$, $P_{sollB1}$, $P_{sollB2}$, $P_{sollK}$, $P_{sollW}$) in Abhängigkeit von einem gemessenen Wert ($P_{ist}$) der Leistungsaufnahme jedes der Energieverbraucher (V), Energiewandler (W) und/oder Energiespeicher ($B_1$, $B_2$, K) beziehungsweise einem gemessenen Wert ($P_{ist}$) der Leistungsabgabe jedes der Energieerzeuger (G), Energiewandler (W) und/oder Energiespeicher ($B_1$, $B_2$, K) erzeugbar sind.

8. Anordnung nach einem der Ansprüche 1 bis 7, **dadurch gekennzeichnet, dass** die zentrale Recheneinheit (Z) und/oder die dezentralen Recheneinheiten ($D_v$, $D_g$, $D_{b1}$, $D_{b2}$, $D_k$, $D_w$) in einem oder verschiedenen Steuergeräten zum Beispiel als Programm oder als Programmmodul implementiert sind.

9. Verfahren zum Regeln von Leistung in einem Kraftfahrzeugbordnetz mit einer Anordnung nach einem der Ansprüche 1 bis 7,
**dadurch gekennzeichnet,**
**dass** die zentrale Recheneinheit (Z) die Sollwerte ($P_{sollV}$, $P_{sollG}$, $P_{sollB1}$, $P_{sollB2}$, $P_{sollK}$, $P_{sollW}$) der maximal erlaubten Leistungsaufnahme für Energieverbraucher (V) mit höchster Priorität auf den von der jeweiligen die zentrale Recheneinheit (Z) vorausgesagten zukünftigen Wert der Leistungsaufnahme ($P_{wunsch}$) setzt.

10. Verfahren nach Anspruch 9, **dadurch gekennzeichnet, dass** bei einem Mangel an von den Leistungserzeugern (G) oder den Energiespeichern ($B_1$, $B_2$, K) oder den Energieumwandlern (W) zur Verfügung stellbaren Leistung die zentrale Recheneinheit (Z) die Sollwerte für Verbraucher mit niedriger Priorität in Stufen schrittweise reduziert.

11. Verfahren nach Anspruch 9 oder 10, **dadurch gekennzeichnet, dass** bei einem Mangel an von den Leistungserzeugern (G) oder den Energiespeichern ($B_1$, $B_2$, K) oder den Energiewandlern (W) zur Verfügung stellbaren Leistung die zentrale Recheneinheit (Z) die Sollwerte für Verbraucher mit niedriger Priorität auf die Mindestleistungsaufnahme

($P_{min}$) setzt oder auf Null reduziert und den Verbraucher abschaltet.

**Claims**

1. Configuration for controlling the power on a vehicle's on-board mains comprising a central processing unit (Z), energy consumers (V), energy generators (G), energy stores ($B_1$, $B_2$, K) and/or energy converters (W), wherein

   - the central processing unit (Z) can produce set-points ($P_{setIV}$, $P_{setG}$, $P_{setB1}$, $P_{setB2}$, $P_{setK}$, $P_{setW}$) of the power inputs of the energy consumers (V) or, if so, the energy stores (B1, B2, K) and/or energy converters (W), and wherein
   - the central processing unit (Z) can produce set-points ($P_{setIV}$, $P_{setG}$, $P_{setB1}$, $P_{setB2}$, $P_{setK}$, $P_{setW}$) of the power output to be provided by the energy generators (G) or, if so, the energy stores (B1, B2, K) and/or energy converters (W),

   **characterized in that**
   the set-points ($P_{setIV}$, $P_{setG}$, $P_{setB1}$, $P_{setB2}$, $P_{setK}$, $P_{setW}$) of the power inputs are equivalent to the admissible maximum power inputs of the energy consumers (V) or, if so, the energy stores (B1, B2, K) and/or energy converters (W), **in that** the energy consumer (V) or, if so, the energy store (B1, B2, K) and/or the energy converter (W) are designed and set up to request power up to the set-point ($P_{setIV}$, $P_{setG}$, $P_{setB1}$, $P_{setB2}$, $P_{setK}$, $P_{setW}$) without communicating with the central processing unit, and **in that** the central processing unit (Z) is designed and set up to ensure that the energy consumer (V) or, if so, the energy store (B1, B2, K) and/or the energy converter (W) will always be able to request power up to the set-point ($P_{setIV}$, $P_{setG}$, $P_{setB1}$, $P_{setB2}$, $P_{setK}$, $P_{setW}$) without provoking an instability of or overload on the vehicle's on-board mains.

2. Configuration of claim 1, **characterized in that** the set-points ($P_{setV}$, $P_{setG}$, $P_{setB1}$, $P_{setB2}$, $P_{setK}$, $P_{setW}$) that can be generated depend on a minimum power input ($P_{min}$) necessary to sustain the functionality of the consumers.

3. Configuration of claim 1 or 2, **characterized in that** the set-points ($P_{setV}$, $P_{setG}$, $P_{setB1}$, $P_{setB2}$, $P_{setK}$, $P_{setW}$) that can be generated depend on a significance (priority) of the consumers with regard to previously determined functions of the motor vehicle.

4. Configuration of claims 2 or 3, **characterized in that** said configuration comprises decentralized processing units ($D_v$, $D_g$, $D_{b1}$, $D_{b2}$, $D_k$, $D_w$) which are allocated to each of the energy consumers (V), energy generators (G), energy converters (W) or energy stores (B1, B2, K) such that the minimum power input ($P_{min}$) and/or the priority (Prio) of the energy consumers (V), energy stores (B1, B2, K) or energy converters (W) can be shown by the central processing unit (Z).

5. Configuration of one of claims 2 to 4, **characterized in that** the set-points ($P_{setV}$, $P_{setG}$, $P_{setB1}$, $P_{setB2}$, $P_{setK}$, $P_{setW}$) that can be generated depend on a future power input ($P_{request}$) predicted by the decentralized processing units (D) for each of the consumers (V), energy stores (B1, B2, K) or energy converters (W) allocated to them.

6. Configuration of claim 5, **characterized in that** the central processing unit (Z) can always set the set-points ($P_{setV}$, $P_{setG}$, $P_{setB1}$, $P_{setB2}$, $P_{setK}$, $P_{setW}$) of top-priority consumers (V) to the maximum admissible power input of a consumer (V) that is equivalent to the future power input ($P_{request}$) predicted.

7. Configuration of claims 1 to 6, **characterized in that** the generation of set-points ($P_{setV}$, $P_{setG}$, $P_{setB1}$, $P_{setB2}$, $P_{setK}$, $P_{setW}$) depends on a measured value (Pact) of the power input in every energy consumer (V), energy converter (W) and/or energy store (B1, B2, K) or that such generation depends on a measured value (Pact) of the power output of every energy generator (G), energy converter (W) and/or energy store (B1, B2, K).

8. Configuration of claims 1 to 7, **characterized in that** the central processing unit (Z) and/or the decentralized processing units ($D_v$, $D_g$, $D_{b1}$, $D_{b2}$, $D_k$, $D_w$) are implemented in a single or multiple control units, for example, as a program or program module.

9. Procedure for controlling the power on a vehicle's on-board mains by means of a configuration of claims 1 to 7, **characterized in that** the central processing unit (Z) will always set the set-points ($P_{setV}$, $P_{setG}$, $P_{setB1}$, $P_{setB2}$, $P_{setK}$, $P_{setW}$) of the maximum

**EP 1 683 681 B1**

admissible power input of top-priority energy consumers (V) to the future power input ($P_{request}$) predicted by the central processing unit (Z).

10. Procedure of claim 9, **characterized in that** the central processing unit (Z) will reduce the set-points of low-priority consumers step by step, if the power that can be provided by the power generators (G) or the energy stores (B1, B2, K) or the energy converters (W) falls short of actual needs.

11. Procedure of claim 9 or 10, **characterized in that**, if the power that can be provided by the power generators (G) or the energy stores (B1, B2, K) or the energy converters (W) falls short of actual needs, the central processing unit (Z) will set the set-points of low-priority consumers to the minimum power input ($P_{min}$) or reduce it to zero and turn off the consumer.

**Revendications**

1. Dispositif de régulation de la puissance logé dans un ordinateur de bord automobile avec une unité centrale (Z), des consommateurs d'énergie (V), des producteurs d'énergie (G), des accumulateurs d'énergie ($B_1$, $B_2$, K) et/ou des convertisseurs d'énergie (W),

   - l'unité centrale (Z) servant à produire des valeurs théoriques ($P_{sollV}$, $P_{sollG}$, $P_{sollB1}$, $P_{sollB2}$, $P_{sollK}$, $P_{sollW}$) à partir des puissances absorbées des consommateurs d'énergie (V) ou, le cas échéant, des accumulateurs d'énergie ($B_1$, $B_2$, K) et/ou des convertisseurs d'énergie (W), et
   - des valeurs théoriques ($P_{sollV}$, $P_{sollG}$, $P_{sollB1}$, $P_{sollB2}$, $P_{sollK}$, $P_{sollW}$) pouvant être produites avec l'unité centrale (Z) pour la puissance à mettre à disposition par les producteurs d'énergie (G) ou, le cas échéant, par les accumulateurs d'énergie ($B_1$, $B_2$, K) et/ou par des convertisseurs d'énergie (W),

   **caractérisé en ce que**
   les valeurs théoriques ($P_{sollV}$, $P_{sollG}$, $P_{sollB1}$, $P_{sollB2}$, $P_{sollK}$, $P_{sollW}$) des puissances absorbées représentent les puissances absorbées maximales autorisées des consommateurs d'énergie (V) ou, le cas échéant, des accumulateurs d'énergie ($B_1$, $B_2$, K) et/ou des convertisseurs d'énergie (W),
   les consommateurs d'énergie (V) ou, le cas échéant, les accumulateurs d'énergie ($B_1$, $B_2$, K) et/ou les convertisseurs d'énergie (W) sont adaptés et réglés pour demander la puissance jusqu'à la valeur théorique ($P_{sollV}$, $P_{sollG}$, $P_{sollB1}$, $P_{sollB2}$, $P_{sollK}$, $P_{sollW}$), sans communiquer en plus avec l'unité centrale et que
   l'unité centrale (Z) est adaptée et réglée de manière à assurer que les consommateurs d'énergie (V) ou, le cas échéant, les accumulateurs d'énergie ($B_1$, $B_2$, K) et/ou les convertisseurs d'énergie (W) peuvent toujours demander de la puissance jusqu'à la valeur théorique ($P_{sollV}$, $P_{sollG}$, $P_{sollB1}$, $P_{sollB2}$, $P_{sollK}$, $P_{sollW}$) sans qu'une instabilité ou une surcharge du réseau de bord du véhicule ne se produise.

2. Dispositif selon la revendication 1, **caractérisé en ce que** les valeurs théoriques pouvant être produites ($P_{sollV}$, $P_{sollG}$, $P_{sollB1}$, $P_{sollB2}$, $P_{sollK}$, $P_{sollW}$) dépendent d'une puissance absorbée minimale ($P_{min}$) nécessaire pour le maintien de la fonction des consommateurs.

3. Dispositif selon la revendication 1 ou 2, **caractérisé en ce que** les valeurs théoriques ($P_{sollV}$, $P_{sollG}$, $P_{sollB1}$, $P_{sollB2}$, $P_{sollK}$, $P_{sollW}$) pouvant être produites dépendent de l'importance (priorité) des consommateurs pour des fonctions prédéfinies du véhicule.

4. Dispositif selon l'une des revendications 2 ou 3, **caractérisé en ce que** le dispositif comprend des unités décentralisées ($D_v$, $D_g$, $D_{b1}$, $D_{b2}$, $D_k$, $D_W$) affectées aux différents consommateurs d'énergie (V), producteurs d'énergie (G), convertisseurs d'énergie (W) ou accumulateurs d'énergie ($B_1$, $B_2$, K) et avec lesquelles la puissance absorbée minimale ($P_{min}$) et/ou la priorité (Prio) des consommateurs d'énergie (V), des accumulateurs d'énergie ($B_1$, $B_2$, K) ou les convertisseurs d'énergie (W) de l'unité centrale (Z) peuvent être affichées.

5. Dispositif selon l'une des revendications 2 à 4, **caractérisé en ce que** les valeurs théoriques ($P_{sollV}$, $P_{sollG}$, $P_{sollB1}$, $P_{sollB2}$, $P_{sollK}$, $P_{sollW}$) dépendent des valeurs d'une future ($P_{wunsch}$) puissance absorbée prédites par les unités décentralisées (D) pour les consommateurs (V) affectés, les accumulateurs d'énergie ($B_1$, $B_2$, K) ou les convertisseurs d'énergie (W).

6. Dispositif selon la revendication 5, **caractérisé en ce que** la valeur théorique ($P_{sollV}$, $P_{sollG}$, $P_{sollB1}$, $P_{sollB2}$, $P_{sollK}$,

P$_{sollW}$) de la puissance absorbée maximale autorisée d'un consommateur (V) puisse toujours être réglée sur la valeur des valeurs (P$_{wunsch}$) prédites de la future puissance absorbée par l'unité centrale (Z) pour les consommateurs (V) avec la priorité maximale.

7. Dispositif selon l'une des revendications 1 à 6, **caractérisé en ce que** les valeurs théoriques (P$_{sollV}$, P$_{sollG}$, P$_{sollB1}$, P$_{sollB2}$, P$_{sollK}$, P$_{sollW}$) pouvant être produites peuvent être produites en fonction d'une valeur (P$_{ist}$) mesurée de la puissance absorbée de chacun des consommateurs d'énergie (V), des convertisseurs d'énergie (W) et/ou des accumulateurs d'énergie (B$_1$, B$_2$, K) ou d'une valeur (P$_{ist}$) mesurée de la puissance dissipée de chacun des producteurs d'énergie (G), des convertisseurs d'énergie (W) et/ou des accumulateurs d'énergie (B$_1$, B$_2$, K).

8. Dispositif selon l'une des revendications 1 à 7, **caractérisé en ce que** l'unité centrale (Z) et/ou les unités décentralisées (D$_v$, D$_g$, D$_{b1}$, D$_{b2}$, D$_k$, D$_W$) sont implémentées dans un ou différents appareils de commande par exemple en tant que programme ou module de programme.

9. Procédé pour la régulation de la puissance dans un réseau de bord automobile avec un dispositif selon l'une des revendications 1 à 7,
**caractérisé en ce que**
l'unité centrale (Z) règle les valeurs théoriques (P$_{sollV}$, P$_{sollG}$, P$_{sollB1}$, P$_{sollB2}$, P$_{sollK}$, P$_{sollW}$) de la puissance absorbée maximale autorisée pour les consommateurs d'énergie (V) avec la priorité maximale sur la future valeur respective de la puissance absorbée (P$_{wunsch}$) prédite par l'unité centrale (Z).

10. Procédé selon la revendication 9, **caractérisé en ce que**, en cas de manque de puissance mise à disposition sur les producteurs de puissance (G) ou les accumulateurs d'énergie (B$_1$, B$_2$, K) ou sur les convertisseurs d'énergie (W), l'unité centrale (Z) réduit progressivement en pas les valeurs théoriques pour les consommateurs à faible priorité.

11. Procédé selon la revendication 9 ou 10, **caractérisé en ce que**, en cas de manque de puissance mise à disposition sur les producteurs de puissance (G) ou les accumulateurs d'énergie (B$_1$, B$_2$, K) ou sur les convertisseurs d'énergie (W), l'unité centrale (Z) règle les valeurs théoriques pour les consommateurs à la puissance absorbée minimale (P$_{min}$) ou les réduit à zéro et met les consommateurs hors service.

EP 1 683 681 B1

Fig. 1a

V

$U_{soll}$

$P_{soll\,V}$

$P_{free}$

ID
$P_{istV}$
$P_{wunschV}$
$P_{maxV}$
$P_{minV}$
$P_{rio_V}$
Netz

7

M          G

UDA

$P_{soll\,G}$

ID
$P_{istG}$
$P_{minG}$
$P_{maxG}$
$P_{wunschG}$
Netz

6

$B_1$      $S_1$   $Z_1$

BTS

$P_{soll\,B1}$

ID
$P_{istB1}$
$P_{minB1}$
$P_{maxB1}$
$P_{wunschB1}$
Netz

6

Fig. 1 b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004080764 A
- WO 0035714 A